# EUROPEAN PATENT APPLICATION

(11) **EP 4 757 412 A1**
(43) Date of publication of application: **10.06.2026**
(21) Application number: 24851511.6
(22) Date of filing: 10.07.2024
(51) Int. Cl.: H04W 36/00, H04W 56/00, H04W 72/20, H04W 84/06

(54) **TERMINAL, BASE STATION, AND COMMUNICATION METHOD**

(30) Priority: 04.08.2023 JP 2023127752
(71) Applicant: Panasonic Intellectual Property Corporation of America, Torrance, CA 90504 (US)
(72) Inventor: NISHIO, Akihiko, Kadoma-shi, Osaka 571-8501 (JP); SUZUKI, Hidetoshi, Kadoma-shi, Osaka 571-8501 (JP)
(74) Representative: Grünecker Patent- und Rechtsanwälte PartG mbB
(86) International application number: PCT/JP2024/024892
(87) International publication number: WO 2025/033082

(57) **Abstract**

The present invention appropriately controls communication timing. This terminal comprises: a reception circuit that receives control information relating to at least one of a first stop timing of downlink communication in a first communication path before switching, a second stop timing of uplink communication in the first communication path, a first start timing of downlink communication in a second communication path after switching, and a second start timing of uplink communication in the second communication path; and a control circuit that controls resynchronization processing in the second communication path on the basis of the control information.

## Description

### Technical Field

The present disclosure relates to a terminal, a base station, and a communication method.

### Background Art

In the standardization of 5G, a new radio access technology (NR) has been specified in 3GPP, and the NR Release 15 (Rel. 15) specification has been issued.

### Citation List

### Non-Patent Literature

NPL 1 3GPP, TR 38.821, V16.2.0 "Solutions for NR to support non-terrestrial networks (NTN) (Release 16)"
NPL 2 R2-2305937, "Satellite switching without PCI change", InterDigital

### Summary of Invention

However, there is room for discussion regarding a control method for communication timing.

One non-limiting exemplary embodiment of the present disclosure facilitates providing a terminal, a base station, and a communication method each capable of appropriately controlling communication timing.

A terminal according to one exemplary embodiment of the present disclosure includes: reception circuitry, which, in operation, receives control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and control circuitry, which, in operation, controls re-synchronization processing in the second communication path based on the control information.

It should be noted that general or specific embodiments may be implemented as a system, an apparatus, a method, an integrated circuit, a computer program, a storage medium, or any selective combination thereof.

According to one exemplary embodiment of the present disclosure, it is possible to appropriately control communication timing.

Additional benefits and advantages in one aspect of the present disclosure will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of satellite switching;
FIG. 2 is a block diagram illustrating an exemplary configuration of a part of a base station;
FIG. 3 is a block diagram illustrating an exemplary configuration of a part of a terminal;
FIG. 4 is a block diagram illustrating an exemplary configuration of the base station;
FIG. 5 is a block diagram illustrating an exemplary configuration of the terminal;
FIG. 6 is a sequence diagram illustrating an operation example of the base station and the terminal;
FIG. 7 is a sequence diagram illustrating an operation example of the base station and the terminal;
FIG. 8 is a sequence diagram illustrating an operation example of the base station and the terminal;
FIG. 9 is a sequence diagram illustrating an operation example of the base station and the terminal;
FIG. 10 is a sequence diagram illustrating an operation example of the base station and the terminal;
FIG. 11 is a sequence diagram illustrating an operation example of the base station and the terminal;
FIG. 12 is a sequence diagram illustrating an operation example of the base station and the terminal;
FIG. 13 illustrates an exemplary architecture of a 3GPP NR system;
FIG. 14 is a schematic diagram illustrating functional separation between NG-RAN and 5GC;
FIG. 15 is a sequence diagram of a Radio Resource Control (RRC) connection setup/reconfiguration procedure;
FIG. 16 schematically illustrates usage scenarios of enhanced Mobile BroadBand (eMBB) massive Machine Type Communications (mMTC), and Ultra Reliable and Low Latency Communications (URLLC); and
FIG. 17 is a block diagram illustrating an exemplary 5G system architecture for a non-roaming scenario.

### Description of Embodiments

Hereinafter, embodiments of the present disclosure will be described in detail with reference to the accompanying drawings.

### [Networks other than Terrestrial Network (Non-Terrestrial Network (NTN)]

NR Rel. 15 is specified as a radio access technology for the terrestrial network. Meanwhile, in Release 17 (Rel. 17), a non-terrestrial network (NTN) such as communication using a satellite or a high altitude pseudo-satellite (high-altitude platform station (HAPS)) has been supported (e.g., NPL 1). In Release 18 (Rel. 18), the NTN extension technology has been discussed.

One of the NTN extension technologies is a mobility extension technology such as handover and cell reselection. For example, in the case of a non-geostationary satellite such as a low earth orbit satellite (LEO), the efficiency of switching between satellites or feeder links has been studied. Note that the feeder link is, for example, a radio link between a terrestrial base station or a gateway (GW) and a satellite.

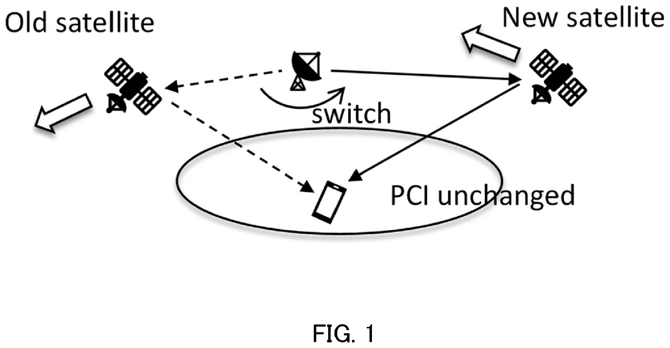

For example, as illustrated in FIG. 1, a communication path switching method to a terminal in which a satellite or a feeder link is changed without changing a cell ID (e.g., Physical Cell Identification (PCI)) at the time of switching the satellite or the feeder link has been studied (e.g., NPL 2). In this method, it is possible to switch the satellite or feeder link with a simple process without performing processing including radio resource control (RRC) connection reestablishment such as handover, or security update (e.g., mobility process at Layer 3 (L3) level).

Here, when a satellite or a feeder link used for communication is switched (hereinafter, referred to as "satellite switching"), a terminal (e.g., User Equipment (UE)) performs re-synchronization with a new satellite (satellite after switching) in order to continue the communication. Notifying, from a base station (e.g., gNB), a message for notifying a terminal of the necessity of re-synchronization (e.g., "notification to re-acquire DL/UL synchronization" message) has been discussed.

Further, as to the timing for satellite switching, notification of a stop timing of an old link (e.g., "t-Service") and a start timing of a new link (e.g., "t-Start") has been discussed.

Meanwhile, in satellite communication, the round-trip propagation delay time (e.g., Round Trip Time (RTT) is long, and thus, the timing at the base station and the timing at the terminal may differ from each other. Further, the round-trip propagation delay time in satellite communication varies depending on the position of the satellite, and thus, the round-trip propagation delay time may differ before and after the satellite switching.

Further, depending on the network configuration, the beam direction (e.g., which satellite the base station transmits to or receives from) may be the same for downlink (transmission) and uplink (reception), or may be independent from each other. For example, when the beam direction is switched by mechanical control such as a parabolic antenna, the beam direction is the same for both downlink and uplink, and the switching time takes 100 ms or more. Meanwhile, in a case where the beam direction is switched by electronic control such as a phased array antenna, the beam direction can be configured independently for downlink and uplink, and the switching time is substantially negligible.

As described above, there is room for discussion on the round-trip propagation delay time in satellite communication, the timing notification considering beam switching between downlink and uplink, and the terminal operation.

In one non-limiting exemplary embodiment of the present disclosure, the round-trip propagation delay time in satellite communication, the timing notification considering beam switching between downlink and uplink, and the terminal operation will be described. For example, in one non-limiting exemplary embodiment of the present disclosure, a base station notifies a terminal of at least one of the stop timing of downlink of an old satellite link (e.g., communication path before switching), the stop timing of uplink of the old satellite link, the start timing of downlink of a new satellite link (e.g., communication path after switching), and/or the uplink start timing of the new satellite link. The terminal performs re-synchronization based on the notified timing.

### [Overview of Communication System]

A communication system according to one exemplary embodiment of the present disclosure includes base station 100 and terminal 200.

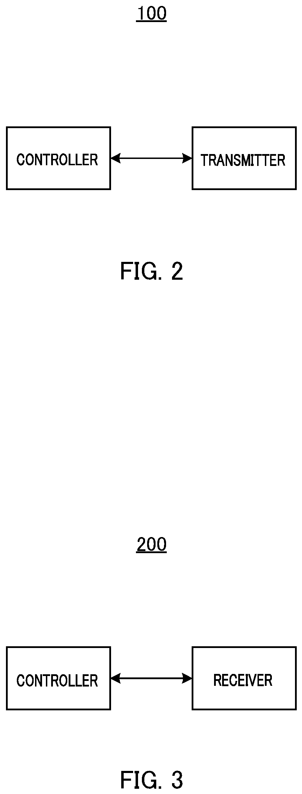

FIG. 2 is a block diagram illustrating an exemplary configuration of a part of base station 100. In base station 100 illustrated in FIG. 2, a transmitter (e.g., corresponding to transmission circuitry) transmits control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path. A controller (e.g., control circuitry) controls re-synchronization processing in the second communication path based on the control information.

FIG. 3 is a block diagram illustrating an exemplary configuration of a part of terminal 200. In terminal 200 illustrated in FIG. 3, a receiver (e.g., corresponding to reception circuitry) receives information related to at least one of a first stop timing of downlink communication in a first communication path before switching, a second stop timing of uplink communication in a first communication path, a first start timing of downlink communication in a second communication path after switching, and/or a second start timing of uplink communication in the second communication path. A controller (e.g., corresponding to control circuitry) controls at least one of the downlink communication and/or the uplink communication based on the information.

### (Embodiment 1)

In the present embodiment, base station 100 assumes a case where the beam directions of downlink (downlink or downlink communication) and uplink (uplink or uplink communication) are the same (e.g., which satellite base station 100 transmits to or receives from), some amount of time (e.g., a time equal to or longer than a threshold) is required for switching of the beam (or satellite), and for example, a period (time period) in which transmission and reception cannot be performed occurs.

### [Configuration of Base Station]

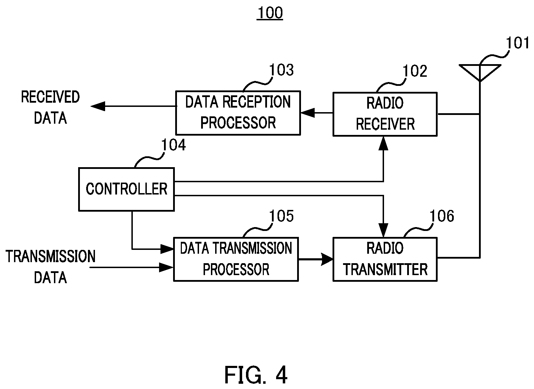

FIG. 4 is a block diagram illustrating an exemplary configuration of base station 100 according to the present embodiment. Base station 100 includes, for example, antenna 101, radio receiver 102, data reception processor 103, controller 104, data transmission processor 105, and radio transmitter 106.

At least one of data reception processor 103, controller 104, and/or data transmission processor 105 illustrated in FIG. 4 may be included in the controller illustrated in FIG. 2, for example. Further, at least one of antenna 101 and/or radio transmitter 106 illustrated in FIG. 4 may be included in the transmitter illustrated in FIG. 2, for example.

Radio receiver 102 performs, for example, analog reception processing and digital reception processing such as down-conversion, A/D conversion, and filtering on a signal received from terminal 200 via antenna 101 and outputs the signal after the reception processing to data reception processor 103. Further, radio receiver 102 stops and starts reception in accordance with an indication from controller 104.

Note that the signal received by radio receiver 102 may include, for example, at least one of a Physical Uplink Shared Channel (PUSCH), a Physical Uplink Control Channel (PUCCH), a Physical Random Access Channel (PRACH), and/or a Sounding Reference Signal (SRS).

Data reception processor 103 performs, for example, channel estimation, demodulation processing, and decoding processing on the received signal input from radio receiver 102 and obtains a data sequence (received data).

Controller 104 generates, for example, system information (or broadcast information) such as a Master Information Block (MIB) or a System Information Block (SIB), and terminal individual control information (e.g., RRC message). Controller 104 outputs the generated information to data transmission processor 105. Further, controller 104 indicates radio receiver 102 to stop and start reception and indicates radio transmitter 106 to stop and start transmission based on the generated information.

The system information may include, for example, at least one of control information for NTN, such as information related to the orbit or position of a satellite (satellite ephemeris information), a common TA parameter used for timing advance (TA) of a terminal, and/or an epoch time (a reference time for the satellite ephemeris information and the common TA parameter).

The RRC message may include, for example, information related to satellite switching, such as notification information for re-synchronization and timing information. The timing information may include, for example, information related to the stop timing of downlink and uplink (e.g., transmission and reception) of the satellite link before switching and information related to the start timing of downlink and uplink (e.g., transmission and reception) of the satellite link after switching (e.g., information related to the satellite switching timing). Further, these pieces of information may be included in system information.

Data transmission processor 105 performs encoding (e.g., Low Density Parity Check (LDPC) encoding) and modulation (e.g., QPSK, 16QAM) on, for example, the transmission data and the control information input from controller 104, and outputs the modulated signal to radio transmitter 106.

Radio transmitter 106 performs transmission processing such as D/A conversion, filtering, up-conversion, and amplification on the signal input from data transmission processor 105, for example, and transmits the radio signal after the transmission processing from antenna 101. Further, radio transmitter 106 stops and starts transmission in accordance with an indication from controller 104.

### [Configuration of Terminal]

Next, an exemplary configuration of terminal 200 will be described.

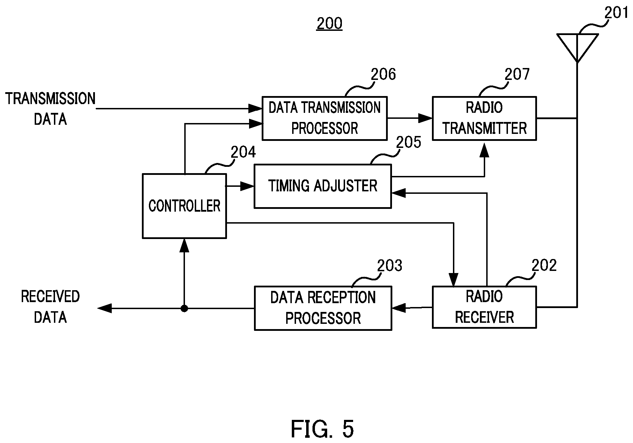

FIG. 5 is a block diagram illustrating an exemplary configuration of terminal 200 according to the present embodiment. Terminal 200 includes, for example, antenna 201, radio receiver 202, data reception processor 203, controller 204, timing adjuster 205, data transmission processor 206, and radio transmitter 207.

At least one of data reception processor 203, controller 204, timing adjuster 205, and/or data transmission processor 206 illustrated in FIG. 5 may be included in, for example, the controller illustrated in FIG. 3. Further, at least one of antenna 201 and/or radio receiver 202 illustrated in FIG. 5 may be included in the receiver illustrated in FIG. 3, for example.

Radio receiver 202 performs, for example, analog reception processing and digital reception processing such as down-conversion, A/D conversion, and filtering on the downlink signal received from base station 100 via antenna 201, and outputs the signal after the reception processing to data reception processor 203. Further, radio receiver 202 outputs information related to the reception timing of a signal for timing synchronization, such as a synchronization signal (e.g., Synchronization Signal Block (SSB)) included in the received signal, to timing adjuster 205. Further, radio receiver 202 performs re-synchronization processing (e.g., re-synchronization or re-acquirement of synchronization) with base station 100 in accordance with an indication from controller 204.

Data reception processor 203 performs, for example, demodulation processing and decoding processing on a received signal (e.g., a downlink signal such as SSB, PDCCH, or PDSCH) input from radio receiver 202.

The control signal (e.g., PDCCH) may include, for example, resource allocation information for a downlink data signal (e.g., PDSCH), resource allocation information for an uplink data signal (e.g., PUSCH), or resource allocation information for PUCCH to be used for HARQ-ACK transmission for PDSCH. Further, the control information (e.g., PDCCH) may include control information for Paging, for example. Further, the downlink data signal (e.g., PDSCH) may include, for example, user data. Further, the downlink data signal (e.g., PDSCH) may include, for example, broadcast information such as system information, RRC control information, Paging information, MAC Control Element (MAC CE) control information, RACH response (e.g., Message 2 or Msg.2), or information related to a TA command.

Further, data reception processor 203 performs reception processing of information related to satellite switching (e.g., re-synchronization notification information, timing information, and the like) included in, for example, the broadcast information or RRC control information (e.g., RRCReconfiguration message), and outputs the signal after the reception processing to controller 204. Further, data reception processor 203 outputs information for NTN (e.g., including at least one of satellite ephemeris, a common TA parameter, and/or an Epoch time) to controller 204.

Controller 204 acquires the position information of terminal 200 (e.g., information such as latitude, longitude, altitude, and the like) by Global Navigation Satellite System (GNSS) or the like. Further, controller 204 calculates the orbit or position of the satellite based on the information for NTN input from data reception processor 203 (e.g., information related to satellite ephemeris and epoch time). Then, controller 204 calculates a timing adjustment value (e.g., a TA value) based on the round-trip delay time between terminal 200 and the satellite, calculated using the position information of terminal 200 and the information on the orbit or position of the satellite, and the round-trip delay time between terminal 200 and the satellite, calculated using the common TA parameter, and outputs the calculated timing adjustment value to timing adjuster 205.

Further, controller 204 outputs an indication related to the re-synchronization to radio receiver 202 based on the information related to the satellite switching received and input from data reception processor 203 (e.g., re-synchronization notification information and timing information). Further, controller 204 may determine, based on the timing information, the timing for stopping (or may be referred to as "pausing") and resuming the uplink transmission, and the timing for stopping (or may be referred to as "pausing") and resuming at least one of the processing of detecting and/or recovering from a Radio Link Failure (RLF) (hereinafter, also referred to as detection/recovery processing) (operation examples will be described later). Further, controller 204 may output an indication to data transmission processor 206 to stop and resume the uplink transmission and to stop (or may be referred to as "pause") and resume the RLF/recovery processing.

Timing adjuster 205 controls (e.g., adjusts) the transmission timing of the transmission signal (uplink signal) based on, for example, information related to the reception timing input from radio receiver 202 and information related to the timing adjustment value input from controller 204. Timing adjuster 205 outputs information related to timing adjustment to radio transmitter 207.

Further, timing adjuster 205 may hold information related to the reception timing of a signal for timing synchronization, such as a synchronization signal (e.g., SSB). The information related to the reception timing may be used, for example, when data is received in radio receiver 202. Further, when timing adjuster 205 performs re-synchronization at the time of satellite switching, the timing adjuster 205 may hold information related to a new timing.

Note that timing adjuster 205 may perform not only timing adjustment but also frequency adjustment.

Data transmission processor 206 performs encoding (e.g., LDPC encoding) and modulation processing (e.g., QPSK and 16QAM) on, for example, the transmission data input, and outputs the signal (e.g., PUSCH, PUCCH, PRACH, or SRS) mapped to the time and frequency resource to radio transmitter 207. Further, data transmission processor 206 may stop (or may be referred to as "pause") and resume the transmission to base station 100 based on the indication from controller 204 to stop or resume the uplink transmission. Further, data transmission processor 206 may stop (or may be referred to as "pause") and resume RACH transmission for RLF recovery based on the indication from controller 204 to stop or resume the recovery processing of RLF.

Radio transmitter 207 performs transmission processing such as D/A conversion, filtering, up-conversion, and amplification on the signal input from data transmission processor 206, for example, and transmits the radio signal after the transmission processing from antenna 201. Radio transmitter 207 performs, for example, timing adjustment of transmission based on the timing information input from timing adjuster 205.

### [Operation Examples of Base Station and Terminal]

Next, operation examples of base station 100 and terminal 200 will be described.

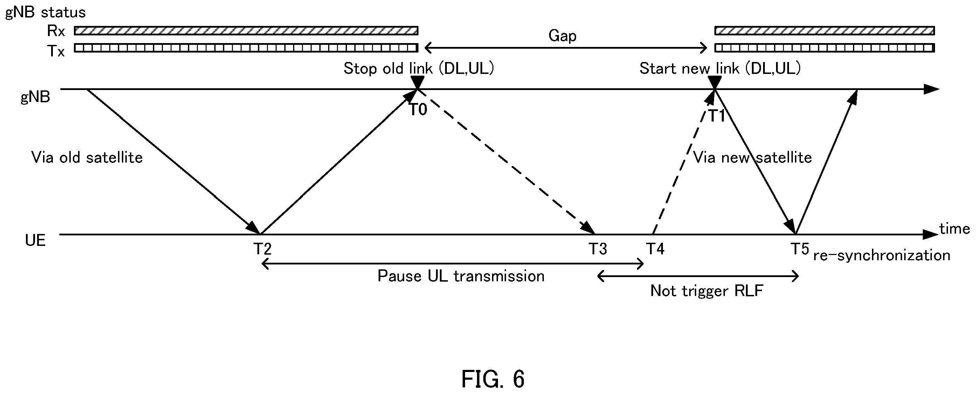

FIG. 6 is a sequence diagram illustrating an operation example of base station 100 and terminal 200. FIG. 6 illustrates a case where, as an example, the round-trip propagation delay time in the satellite link after satellite switching is shorter than the round-trip propagation delay time in the satellite link before the satellite switching.

Further, as described above, in the present embodiment, for base station 100, the beam directions for downlink and uplink are the same.

As illustrated in FIG. 6, base station 100 stops downlink communication (transmission) and uplink communication (reception) for the current satellite (old satellite) at time T0 and starts downlink communication (transmission) and uplink communication (reception) for a new satellite (satellite after switching) at time T1.

In FIG. 6, in the period from time T0 to time T1 (the period is referred to as Gap in FIG. 6), base station 100 receives no signal from terminal 200.

Base station 100 notifies terminal 200 of information related to satellite switching (e.g., re-synchronization notification information or timing information). For example, base station 100 notifies terminal 200 of information related to satellite switching at a timing sufficiently earlier than a timing at which base station 100 is capable of receiving feedback information such as HARQ-ACK from terminal 200 for the information related to satellite switching, by time T0.

Note that the timing information may include, for example, time information for identifying time T0 and time T1, or timing information for time T0 and time T1 represented by a System Frame Number (SFN) or a slot number. Further, base station 100 may notify terminal 200 of information related to the position of the satellite after switching (e.g., ephemeris and epoch time) and information related to the feeder link delay (e.g., common TA parameter).

Terminal 200 may start re-synchronization processing in the satellite link after switching based on information related to the start timing of downlink and uplink in the satellite link after switching, for example. For example, terminal 200 starts the processing of re-synchronization at or after time T5 when the signal reaches via the satellite after switching.

Further, terminal 200 may be controlled not to perform uplink communication in a period determined based on, for example, the stop timing of uplink of the satellite link before switching and the start timing of uplink of the satellite link after switching.

For example, terminal 200 does not need to perform uplink transmission during the period (e.g., period from time T2 to time T4 in FIG. 6) from the transmission timing, in which the time at which the uplink transmission signal from terminal 200 is received at base station 100 is at or after time T0 (e.g., the stop timing of uplink), based on the propagation delay amount calculated from the position of the satellite before switching and the position of terminal 200, to the transmission timing, in which the time at which the uplink transmission signal from terminal 200 is received at base station 100 is at or before time T1, based on the propagation delay amount calculated from the position of the satellite after switching and the position of terminal 200. In the example of FIG. 6, terminal 200 stops the uplink transmission at the timing (time T2 in FIG. 6) when the time at which the uplink transmission signal from terminal 200 is received at base station 100 via the satellite before switching becomes time T0. Further, terminal 200 resumes the uplink transmission at a timing (time T4 in FIG. 6) when the time at which the uplink transmission signal from terminal 200 is received at base station 100 via the satellite after switching becomes time T1.

Further, terminal 200 may be controlled not to start (or trigger) processing related to RLF or Beam Failure (BF) in a period determined based on, for example, the stop timing of downlink of the satellite link before switching and the start timing of downlink of the satellite link after switching.

In the example of FIG. 6, terminal 200 does not receive a downlink signal during the period from time T3 when the signal transmitted by base station 100 at time T0 reaches terminal 200 via the satellite before switching, to time T5 when the signal transmitted by base station 100 at time T1 reaches terminal 200 via the satellite after switching. For example, terminal 200 does not start (or trigger) the detection/recovery processing of RLF or BF during this period (the period from time T3 to time T5 in FIG. 6). For example, terminal 200 may start the detection/recovery processing of RLF or BF after the re-synchronization in the satellite link after switching is completed, at time T5 or thereafter.

For example, terminal 200 may not perform the determination processing of RLF and BF during the period from time T3 to time T5 in FIG. 6 and may stop the timer (time alignment timer or the like) for determination of RLF and BF at the time of time T3.

Note that in FIG. 6, a case where terminal 200 resumes uplink transmission at time T4 has been described, but the present disclosure is not limited thereto, and terminal 200 may resume uplink transmission at or after time T4. For example, terminal 200 may be controlled not to perform uplink communication in a period determined based on the stop timing of uplink of the satellite link before switching and the start timing of downlink of the satellite link after switching. In the example of FIG. 6, the downlink signal of the satellite link after switching is not received by terminal 200 until time T5, and thus, it is difficult for terminal 200 to calculate the propagation loss used for transmission power control. Accordingly, terminal 200 may refrain from performing uplink communication during the period from time T2 to time T5 and may resume uplink transmission at or after time T5.

Further, in FIG. 6, a description has been given of a case where the detection/recovery processing of RLF is not started at or after time T3, but without any limitation to this case, and the timing at which the detection/recovery processing of RLF is not started may be configured at or before time T3. For example, terminal 200 may be controlled not to trigger processing related to RLF or BF in a period determined based on the stop timing of uplink of the satellite link before switching and the start timing of downlink of the satellite link after switching. In the example of FIG. 6, no uplink signal is received by base station 100 at or after time T2, and the RACH signal for recovery of RLF is not received (or is not passed). Accordingly, terminal 200 may not start the detection/recovery processing of RLF at or after time T2, which is the timing at which uplink is no longer passed, and may perform the detection processing of RLF between time T2 and time T3 without performing the recovery processing of RLF. In this case, the recovery processing of RFL may be performed after the re-synchronization is established in terminal 200.

Operation examples of base station 100 and terminal 200 have been described above.

As described above, base station 100 transmits information related to a stop timing of downlink communication in a communication path before switching (e.g., satellite link before switching), a stop timing of uplink communication in the communication path before switching, a start timing of downlink communication in a communication path after switching (e.g., satellite link after switching), and a start timing of uplink communication in the communication path after switching. Then, terminal 200 controls the re-synchronization processing in the communication path after switching based on the information transmitted from base station 100.

Thus, information related to the stop timing of downlink and uplink of the satellite link before switching and on the start timing of downlink and uplink of the satellite link after switching is notified to terminal 200 together with the notification information related to re-synchronization related to the satellite switching. Accordingly, terminal 200 can identify an appropriate timing to start re-synchronization in the satellite link after switching, thereby, reducing the power consumption required for the re-synchronization processing is made possible.

Further, terminal 200 can identify a time period (period) in which the uplink signal does not reach base station 100 during the satellite switching. For this reason, terminal 200 can stop and resume the uplink transmission at an appropriate timing in the satellite switching, thereby reducing interference with an adjacent cell and reducing power consumption associated with uplink transmission.

Further, terminal 200 can identify a time period (period) in which the downlink signal does not reach terminal 200 during the satellite switching, and thus can stop and resume the detection/recovery processing of RLF or BF at an appropriate timing.

Thus, according to the present embodiment, it is possible to appropriately control the communication timing in terminal 200 by considering the round-trip propagation delay time in satellite communication and the beam switching between downlink and uplink.

### (Embodiment 2)

The configurations of base station 100 and terminal 200 according to the present embodiment may be the same as those in, for example, Embodiment 1.

In the present embodiment, base station 100 is assumed to be capable of switching beams (e.g., satellites) instantaneously, as in the case of a phased array antenna. Further, base station 100 may have the same beam directions of downlink and uplink (e.g., which satellite base station 100 transmits to or receives from) or may be capable of configuring beam directions of downlink and uplink independently.

In base station 100 and terminal 200 according to the present embodiment, operations different from those in Embodiment 1 will be described.

Base station 100 (e.g., controller 104) generates information related to stop timing of downlink (e.g., transmission) of the satellite link before switching, stop timing of uplink (e.g., reception) of the satellite link before switching, start timing of downlink (e.g., transmission) of the satellite link after switching, and start timing of uplink (e.g., reception) of the satellite link after switching, as information related to the satellite switching timing, and notifies terminal 200 of the information.

Terminal 200 (e.g., radio receiver 202 and data reception processor 203) receives information related to the stop timing of downlink (e.g., transmission) of the satellite link before switching, the stop timing of uplink (e.g., reception) of the satellite link before switching, the start timing of downlink (e.g., transmission) of the satellite link after switching, and the start timing of uplink (e.g., reception) of the satellite link after switching as information related to the satellite switching timing from base station 100. Further, terminal 200 (e.g., controller 204 and timing adjuster 205) determines the timing of re-synchronization, the timing of uplink transmission stop/resumption, and the timing of detection/recovery processing of RLF described in Embodiment 1 based on the information related to the satellite switching timing received.

Next, an operation example of base station 100 and terminal 200 will be described.

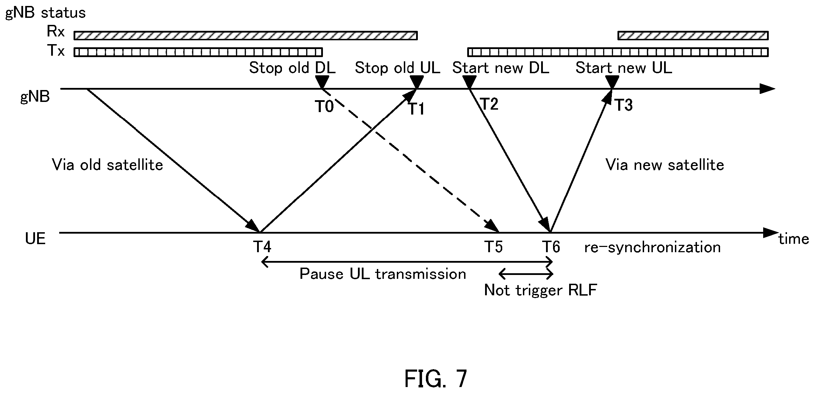

FIG. 7 is a sequence diagram illustrating an operation example of base station 100 and terminal 200. In FIG. 7, the beam directions of downlink and uplink in base station 100 are the same, for example.

As illustrated in FIG. 7, base station 100 stops downlink communication (transmission) with the current satellite (satellite before switching (e.g., old satellite)) at time T0 and stops uplink communication (reception) with the current satellite (satellite before switching) at time T1.

Further, as illustrated in FIG. 7, base station 100 starts downlink communication (transmission) with the new satellite (satellite after switching) at time T2 and starts uplink communication (reception) with the new satellite (satellite after switching) at time T3.

In FIG. 7, during the period from time T1 to time T3, base station 100 receives no signal from terminal 200.

Base station 100 notifies terminal 200 of information related to satellite switching (e.g., re-synchronization notification information or timing information). For example, base station 100 notifies terminal 200 of information related to satellite switching at a timing sufficiently earlier than a timing at which base station 100 is capable of receiving feedback information such as HARQ-ACK from terminal 200 for the information related to satellite switching, by time T1.

Note that the timing information may include, for example, time information for identifying time T0, time T1, time T2, and time T3 (which may be referred to as t-ServiceDL, t-ServiceUL, t-StartDL, and t-StartUL, for example), or timing information represented by an SFN and/or a slot number. Further, base station 100 may notify the terminal of information related to the position of the satellite after switching (e.g., ephemeris and epoch time) and information related to the feeder link delay (e.g., common TA parameter).

Terminal 200 may start the re-synchronization processing in the satellite link after switching based on information related to the start timing of downlink and uplink in the satellite link after switching, for example. For example, terminal 200 starts the processing of re-synchronization at or after time T6 when the signal reaches via the satellite after switching.

Further, terminal 200 may be controlled not to perform uplink communication in a period determined based on, for example, the stop timing of uplink of the satellite link before switching and the start timing of uplink of the satellite link after switching.

For example, terminal 200 does not need to perform uplink transmission during the period (e.g., the period from time T4 to time T6 in FIG. 7) from the transmission timing, in which the time at which the uplink transmission signal from terminal 200 is received by base station 100 is at or after time T1 (e.g., the stop timing of uplink), based on the propagation delay amount calculated from the position of the satellite before switching and the position of terminal 200, to the transmission timing, in which the time at which the uplink transmission signal from terminal 200 is received at base station 100 is at or before time T3, based on the propagation delay amount calculated from the position of the satellite after switching and the position of terminal 200. In the example of FIG. 7, terminal 200 stops the uplink transmission at the timing (time T4 in FIG. 7) when the time at which the uplink transmission signal from terminal 200 is received by base station 100 via the satellite before switching becomes time T1. Further, terminal 200 resumes the uplink transmission at a timing (time T6 in FIG. 7) when the time at which the uplink transmission signal from terminal 200 is received by base station 100 via the satellite after switching becomes time T3.

Note that in a case where terminal 200 has not received the downlink signal (e.g., SSB or the like) via the satellite after switching in a timing (e.g., time T6) at which the time at which the uplink transmission signal from terminal 200 is received by base station 100 via the satellite after switching becomes time T3, it is difficult to calculate the propagation loss to be used for the transmission power control. For this reason, terminal 200 may, for example, resume uplink transmission at a timing after receiving the downlink signal at or after time T6.

Further, terminal 200 may be controlled not to start (or trigger) the processing related to RLF or BF in a period determined based on, for example, the stop timing of downlink of the satellite link before switching and the start timing of downlink of the satellite link after switching.

In the example of FIG. 7, terminal 200 receives no downlink signal during the period from time T5 when the signal transmitted by base station 100 at time T0 reaches terminal 200 via the satellite before switching, to time T6 when the signal transmitted by base station 100 at time T2 reaches terminal 200 via the satellite after switching. For example, terminal 200 does not start (or trigger) the detection/recovery processing of RLF or BF during this period (the period from time T5 to time T6 in FIG. 7). For example, terminal 200 may start the detection/recovery processing of RLF or BF after the re-synchronization in the satellite link after switching is completed, at time T6 and thereafter.

For example, terminal 200 may not perform the determination processing of RLF and BF during the period from time T5 to time T6 in FIG. 7 and may stop the timer (time alignment timer or the like) for the determination of RLF and BF at the time of time T5.

Alternatively, terminal 200 may be controlled not to trigger processing related to RLF or BF in a period determined based on the stop timing of uplink of the satellite link before switching and the start timing of downlink of the satellite link after switching. In the example of FIG. 7, since the uplink transmission signal from terminal 200 via the satellite before switching is not received by base station 100 at or after time T4, terminal 200 may not trigger the detection/recovery processing of RLF in the period from time T4 to time T6.

Note that in the example illustrated in FIG. 7, a description has been given of a method in which each of the following information is notified to terminal 200 as information related to the satellite switching timing: the information related to the stop timing of downlink of the satellite link before switching, the information related to the stop timing of uplink of the satellite link before switching, the information related to the start timing of downlink of the satellite link after switching, and the information related to the uplink start timing of the satellite link after switching (each of times T0, T1, T2, and T3 in the example of FIG. 7), but the present disclosure is not limited thereto.

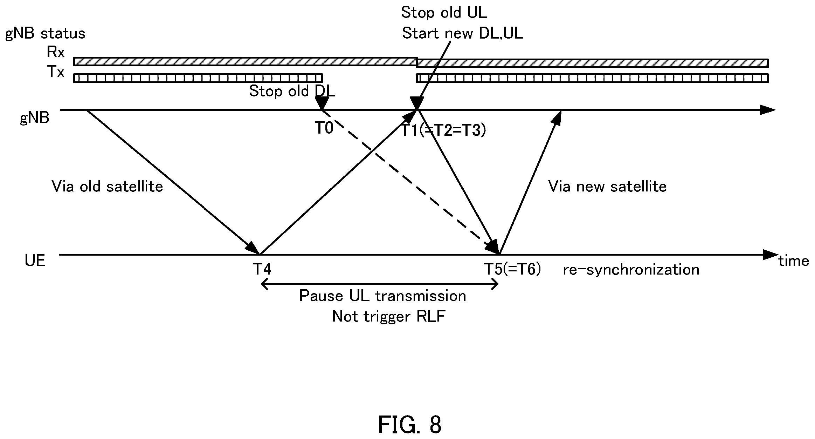

For example, as illustrated in FIG. 8, the three timings, that is, the stop timing (e.g., t-ServiceUL) of uplink (e.g., reception) of the satellite link before switching, the start timing (e.g., t-StartDL) of downlink (e.g., transmission) of the satellite link after switching, and the start timing (e.g., t-StartUL) of uplink (e.g., reception) of the satellite link after switching, may be configured to be the same. In this case, base station 100 may notify terminal 200 of information related to the satellite switching timing, including the stop timing (e.g., time T0) of downlink (e.g., transmission) of the satellite link before switching and the three timings described above (e.g., time T1 (= T2 = T3)).

Alternatively, base station 100 may notify terminal 200 of information related to the satellite switching timing including the stop timing (e.g., time T0) of downlink (e.g., transmission) of the satellite link before switching and may not notify terminal 200 of another timing (e.g., time T1 = T2 = T3). In this case, terminal 200 may estimate timing T1 (= T2 = T3) from the propagation delay time of the satellite link before and after switching.

Next, a case where the beam directions of downlink and uplink of base station 100 can be configured independently will be described.

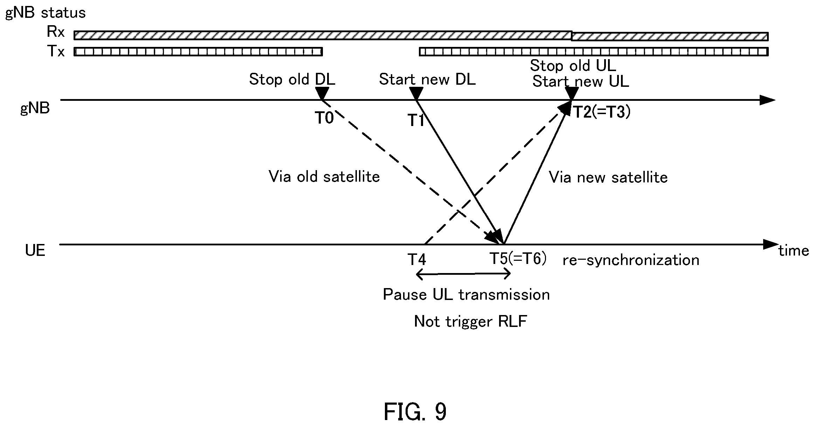

FIG. 9 is a sequence diagram illustrating an operation example of base station 100 and terminal 200. In FIG. 9, the beam directions of downlink and uplink in base station 100 are independently configurable as an example.

In the example of FIG. 9, the stop timing of uplink before switching and the start timing of uplink after switching are substantially the same (e.g., time T2 = time T3).

Further, in the example of FIG. 9, the communication uses different beams (e.g., different satellites) for uplink and downlink between the start timing (time T1) of downlink after switching and the stop timing (time T2) of uplink before switching.

Further, in the example of FIG. 9, a difference (gap) may be configured between the stop timing (e.g., time T0) of downlink of the satellite before switching and the start timing (e.g., time T1) of downlink of the satellite after switching, so that the reception of downlink of the satellite before switching and the reception of downlink of the satellite after switching do not overlap with each other in terminal 200.

In the example of FIG. 9, base station 100 may notify terminal 200 of information related to, for example, the stop timing of downlink of the satellite before switching (e.g., t-ServiceDL. In FIG. 9, time T0), the start timing of downlink of the satellite after switching (e.g., t-StartDL. In FIG. 9, time T1), and the switching timing of uplink (e.g., t-ServiceUL and t-StartUL. In FIG. 9, time T2 (= T3)).

In FIG. 9, terminal 200 may be controlled not to perform uplink communication in a period (e.g., the period from time T4 to time T6) determined based on the stop timing of uplink of the satellite link before switching and the start timing of uplink of the satellite link after switching, as an example.

Further, in FIG. 9, terminal 200 may be controlled not to trigger processing on RLF or BF in a period (e.g., the period from time T4 to time T5) determined based on the stop timing of uplink of the satellite link before switching and the start timing of downlink of the satellite link after switching (or the timing of re-synchronization establishment in the satellite link after switching) as an example.

Note that in the example of FIG. 9, a case where the propagation delay time of the satellite link after switching is shorter than the propagation delay time of the satellite link before switching has been described, but the propagation delay time of the satellite link after switching may be longer than the propagation delay time of the satellite link before switching, or may be the same. In a case where the propagation delay time of the satellite link after switching is longer than the propagation delay time of the satellite link before switching, information related to the stop timing (time T0) of downlink of the satellite before switching and the start timing (time T1) of downlink of the satellite after switching being the same (TO (= T1)), and information related to the stop timing (time T2) of uplink before switching and on the start timing (time T3) of uplink after switching may be notified to terminal 200.

As described above, base station 100 transmits information related to a stop timing of downlink communication in a communication path before switching (e.g., a satellite link before switching), a stop timing of uplink communication in the communication path before switching, a start timing of downlink communication in a communication path after switching (e.g., a satellite link after switching), and a start timing of uplink communication in the communication path after switching. Then, terminal 200 controls the re-synchronization processing in the communication path after switching based on the information transmitted from base station 100.

Thus, the information related to the stop timing of the satellite link before switching and the information related to the start timing of the satellite link after switching, for each of DL (transmission) and UL (reception), as well as the notification information related to the re-synchronization related to the satellite switching are notified to terminal 200. Accordingly, terminal 200 can identify an appropriate timing to start the re-synchronization in the satellite link after switching, which makes it possible to reduce the power consumption required for the re-synchronization processing.

Further, terminal 200 can identify a time period (period) in which no uplink signal reaches base station 100 during the satellite switching. For this reason, terminal 200 can stop and resume uplink transmission at an appropriate timing in the satellite switching, thereby reducing interference with an adjacent cell and reducing power consumption associated with uplink transmission.

Further, terminal 200 can identify a time period (period) in which no downlink signal reaches terminal 200 during the satellite switching, and thus can stop and resume the RLF or BF detection/recovery processing at an appropriate timing.

Thus, according to the present embodiment, it is possible to appropriately control the communication timing in terminal 200 by considering the round-trip propagation delay time in satellite communication and beam switching between downlink and uplink.

### (Embodiment 3)

The configurations of base station 100 and terminal 200 according to the present embodiment may be the same as those in, for example, Embodiment 1.

In the present embodiment, base station 100 notifies terminal 200 of information related to the start timing of downlink for the satellite after switching (e.g., t-StartDL), and does not notify terminal 200 of information related to another timing (e.g., the stop timing of downlink and uplink for the satellite before switching and the start timing of uplink for the satellite after switching).

In base station 100 and terminal 200 according to the present embodiment, operations different from those in Embodiment 1 will be described.

Base station 100 (e.g., controller 104) generates information related to the start timing of downlink (e.g., transmission) of satellite link after switching as information related to the satellite switching timing and notifies terminal 200 of the information.

Terminal 200 (e.g., radio receiver 202 and data reception processor 203) receives information related to the start timing of downlink (e.g., transmission) of the satellite link after switching from base station 100 as information related to the satellite switching timing. Further, terminal 200 (e.g., controller 204 and timing adjuster 205) determines the timing of re-synchronization, the timing of uplink transmission stop/resumption, and the timing of detection/recovery processing of RLF described in Embodiment 1 based on the information related to the satellite switching timing received.

Next, an operation example of base station 100 and terminal 200 will be described.

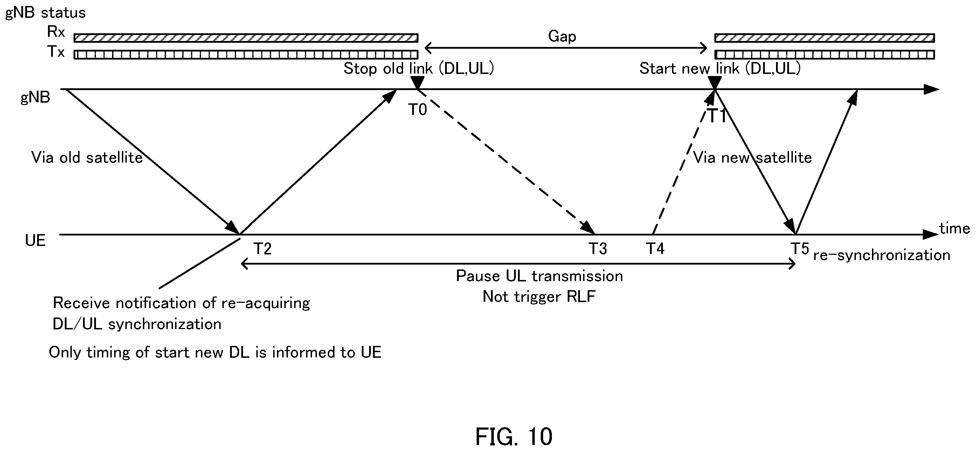

FIG. 10 is a sequence diagram illustrating an operation example of base station 100 and terminal 200. In FIG. 10, as an example, a case will be described in which the beam directions of downlink and uplink in base station 100 (e.g., which satellite base station 100 transmits to and receives from) are the same, and some amount of time (e.g., time equal to or longer than a threshold) is required for switching the beam (e.g., satellite).

As illustrated in FIG. 10, base station 100, in the same manner as in Embodiment 1, stops downlink communication (transmission) and uplink communication (reception) with the current satellite (satellite before switching (e.g., old satellite)) at time T0, and starts downlink communication (transmission) and uplink communication (reception) with a new satellite (satellite after switching) at time T1.

Base station 100 notifies terminal 200 of information related to satellite switching (e.g., re-synchronization notification information or timing information). For example, base station 100 notifies terminal 200 of information related to satellite switching (e.g., re-synchronization notification information or timing information) at a timing sufficiently earlier than a timing at which base station 100 can receive feedback information such as HARQ-ACK from terminal 200 for the information related to satellite switching, by time T0.

Note that the timing information may include, for example, time information (information related to satellite switching timing) for identifying time T1.

Terminal 200 may start the re-synchronization processing in the satellite link after switching based on information related to the start timing of downlink in the satellite link after switching (e.g., time T1), for example. For example, terminal 200 starts the processing of re-synchronization at or after time T5 when the downlink signal from base station 100 via the satellite after switching reaches.

Further, terminal 200 may be controlled not to perform uplink communication in a period determined based on, for example, notification information related to re-synchronization related to satellite switching and the start timing of downlink of the satellite link after switching. For example, terminal 200 may not perform uplink transmission during the period (e.g., the period from time T2 to time T5) until terminal 200 performs re-synchronization with the satellite after switching after receiving the notification information related to re-synchronization on the satellite switching. Alternatively, terminal 200 may refrain from performing uplink transmission during the period (e.g., the period from time T2 to time T4) until an uplink signal is receivable by base station 100 via the satellite after receiving the notification information related to re-synchronization related to the satellite switching.

Further, terminal 200 may be controlled not to start (or trigger) the processing related to RLF or BF in a period (e.g., the period from time T2 to time T5) determined based on, for example, the notification information related to re-synchronization related to the satellite switching and the start timing of downlink of the satellite link after switching.

Note that a case has been described in which terminal 200 stops uplink transmission after receiving the notification information related to re-synchronization related to the satellite switching, but the present disclosure is not limited thereto, and terminal 200 may stop uplink transmission after receiving the notification information related to re-synchronization related to the satellite switching and transmitting the HARQ-ACK.

Further, in the above example, a case where the beam directions of downlink and uplink are the same and some amount of time is required for switching the beam (e.g., a satellite) has been described, but the present disclosure is not limited thereto, and the same operation is applicable even in a case where the beam directions of uplink and downlink are configured independently or in a case where the switching of beam does not take time.

As described above, base station 100 transmits information related to the start timing of downlink communication in the communication path after switching (e.g., satellite link after switching). Then, terminal 200 controls the re-synchronization processing in the communication path after switching based on the information transmitted from base station 100.

Thus, information related to the start timing of the satellite link after switching is notified to terminal 200. Accordingly, terminal 200 can identify an appropriate timing to start the re-synchronization in the satellite link after switching, which makes it possible to reduce the power consumption required for the re-synchronization processing.

Further, after receiving the re-synchronization notification related to the satellite switching, terminal 200 can reduce interference with an adjacent cell by stopping uplink transmission and can also reduce the power consumption associated with the uplink transmission.

### (Embodiment 4)

The configurations of base station 100 and terminal 200 according to the present embodiment may be the same as those in, for example, Embodiment 1.

In the present embodiment, base station 100 notifies terminal 200 of information related to the stop timing of downlink for the satellite before switching (e.g., t-ServiceDL) and does not notify terminal 200 of information related to another timing (e.g., stop timing of uplink for satellite before switching and start timings of downlink and uplink for satellite after switching).

In base station 100 and terminal 200 according to the present embodiment, operations different from those in Embodiment 1 will be described.

Base station 100 (e.g., controller 104) generates information related to the stop timing of downlink (e.g., transmission) of a satellite link before switching as information related to the satellite switching timing and notifies terminal 200 of the information.

Terminal 200 (e.g., radio receiver 202 and data reception processor 203) receives information related to the stop timing of downlink (e.g., transmission) of the satellite link before switching from base station 100 as information related to the satellite switching timing. Further, terminal 200 (e.g., controller 204 and timing adjuster 205) determines the timing of re-synchronization, the timing of uplink transmission stop/resumption, and the timing of detection/recovery processing of RLF described in Embodiment 1 based on the information related to the satellite switching timing received.

Next, an operation example of base station 100 and terminal 200 will be described.

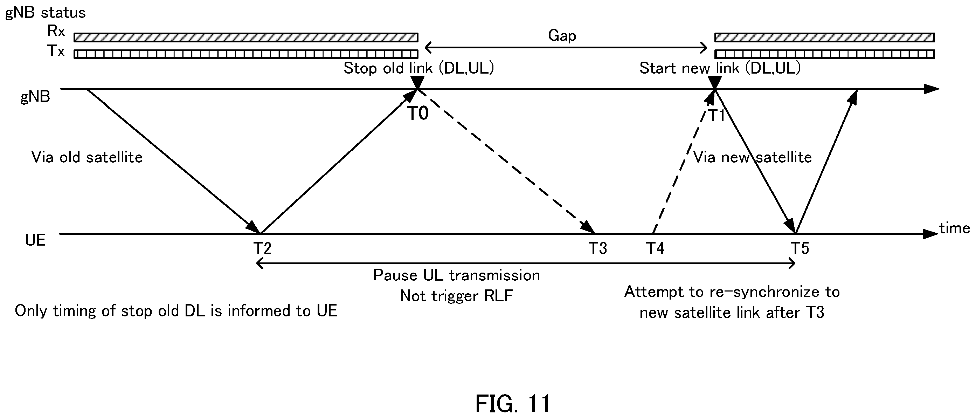

FIG. 11 is a sequence diagram illustrating an operation example of base station 100 and terminal 200. In FIG. 11, as an example, a case will be described in which the beam directions of downlink and uplink in base station 100 (e.g., which satellite base station 100 transmits to and receives from) are the same, and some amount of time (e.g., time equal to or longer than a threshold) is required for switching the beam (e.g., satellite).

As illustrated in FIG. 11, base station 100, in the same manner as in Embodiment 1, stops downlink communication (transmission) and uplink communication (reception) with the current satellite (satellite before switching (e.g., old satellite)) at time T0, and starts downlink communication (transmission) and uplink communication (reception) with a new satellite (satellite after switching) at time T1.

Base station 100 notifies terminal 200 of information related to satellite switching (e.g., re-synchronization notification information or timing information). For example, base station 100 notifies terminal 200 of information related to satellite switching at a timing sufficiently earlier than a timing at which base station 100 is capable of receiving feedback information such as HARQ-ACK from terminal 200 for the information related to satellite switching, by time T0.

Note that the timing information may include, for example, time information (information related to satellite switching timing) for identifying time T0.

Terminal 200 may start the re-synchronization processing in the satellite link after switching based on information related to the stop timing of downlink of the satellite link before switching (e.g., time T0) (corresponding to stop timing of uplink of the satellite link before switching in FIG. 11), for example. For example, terminal 200 starts the re-synchronization processing at or after time T3 or later, at which the signal transmitted from base station 100 at time T0 is received by terminal 200, based on the propagation delay amount calculated from the position of the satellite before switching and the position of terminal 200.

Further, terminal 200 may be controlled not to perform uplink communication in a period determined based on, for example, the stop timing of downlink of the satellite link before switching and the establishment timing of re-synchronization in the satellite link after switching.

For example, terminal 200 may not perform uplink transmission, based on the propagation delay amount calculated from the position of the satellite before switching and the position of terminal 200, in a period (e.g., the period from time T2 to time T5) from the transmission timing (e.g., time T2) at which the time at which the transmission signal from terminal 200 is received by base station 100 is time T0, until the re-synchronization with the satellite after switching is performed (e.g., until the re-synchronization is established).

Further, terminal 200 may be controlled not to start (or trigger) the processing related to RLF or BF in a period (e.g., the period from time T2 to time T5) determined based on the stop timing of downlink of the satellite link before switching and the establishment timing of re-synchronization in the satellite link after switching, for example.

Further, in the above example, a case where the beam directions of downlink and uplink (e.g., which satellite to transmit to or receive from) are the same and some amount of time is required for switching the beam (e.g., satellite) has been described, but the present disclosure is not limited thereto, and the same operation is applicable even in a case where the beam directions of uplink and downlink are configured independently or a case where the switching of beam does not take time.

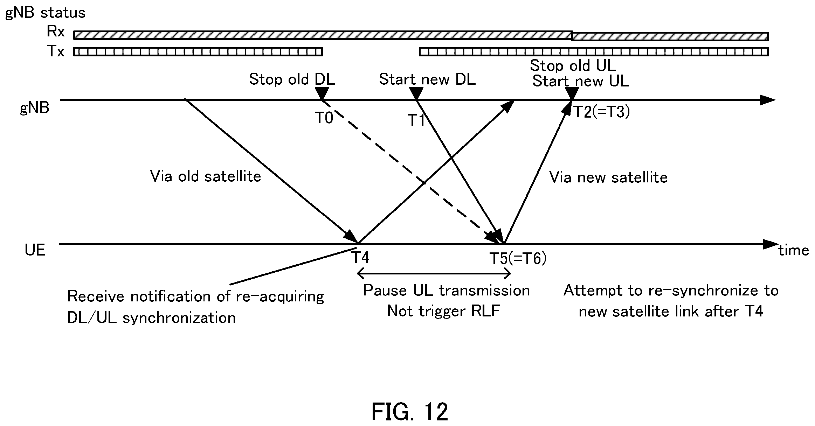

In a case where the switching of beam does not take time, for example, as illustrated in FIG. 12, the start point of the period in which no uplink transmission is performed may be configured to the timing at which terminal 200 receives the notification information related to re-synchronization on the satellite switching (or the timing at which HARQ-ACK for the notification information is transmitted) (e.g., time T4). Alternatively, the start point of the period in which the uplink transmission is not performed may be configured to a later timing of the transmission timing at which the time at which the transmission signal from terminal 200 is received by base station 100 is time T0 and the timing at which the notification information related to re-synchronization related to the satellite switching is received. Thus, terminal 200 can continue the uplink transmission for as long as possible.

As described above, base station 100 transmits information related to the stop timing of downlink communication in a communication path before switching (e.g., satellite link before switching). Then, terminal 200 controls the re-synchronization processing in the communication path after switching based on the information transmitted from base station 100.

Thus, information related to the stop timing of the satellite link before switching is notified to terminal 200. Accordingly, terminal 200 can identify an appropriate timing to start the re-synchronization in the satellite link after switching based on the stop timing of the satellite link before switching, which makes it possible to reduce the power consumption required for the re-synchronization processing.

Further, after receiving the re-synchronization notification related to the satellite switching, terminal 200 can reduce interference with an adjacent cell by stopping the uplink transmission and can also reduce the power consumption associated with the uplink transmission.

Each embodiment of the present disclosure has been described above.

### (Other Embodiments)

Note that in Embodiment 3, base station 100 notifies terminal 200 of information related to the start timing of downlink for the satellite after switching (e.g., t-StartDL), and in Embodiment 4, base station 100 notifies terminal 200 of information related to the stop timing of downlink for the satellite before switching (e.g., t-ServiceDL), but base station 100 may notify terminal 200 of both of the information. Further, terminal 200 may perform any operation described in Embodiment 3 or Embodiment 4.

Note that in each of the above-described embodiments, a case where the detection/recovery processing of RLF is not started in a predetermined period has been described, but the present disclosure is not limited thereto, and, for example, the timer related to RLF may be stopped in the predetermined period. Further, in a period in which a downlink signal reaches terminal 200 but no uplink signal is received by base station 100, detection of RLF is performed, and recovery processing of RLF may not be performed. In this case, the RLF recovery processing may be performed after re-synchronization is established.

Further, in each of the above-described embodiments, a period in which no RLF is detected or triggered has been described, but the same period may be applied to the detection or trigger of BF (Beam Failure) or the detection or trigger of synchronization loss.

Further, the timer for determining RLF and BF in the above-described embodiments may be a timer related to uplink synchronization.

Further, in each of the above-described embodiments, terminal 200 may perform SSB re-reception or PRACH transmission as recovery processing from RLF and BF.

Further, in the period in which uplink transmission is stopped in each of the above-described embodiments, terminal 200 may stop all uplink transmissions or may stop one or some uplink transmissions. For example, terminal 200 may stop a periodic uplink transmission configured by base station 100 and may perform a dynamic uplink transmission (e.g., transmission of PUSCH, PUCCH, SRS, or the like) allocated by a DCI without stopping the dynamic uplink transmission. Note that the periodic uplink transmission includes, for example, a Configured grant, a periodic PUCCH, and a periodic SRS.

Further, as a terminal operation in each of the above-described embodiments, the control of timing of re-synchronization, the timing of uplink transmission stop and resumption, and the timing of determination/recovery processing of RLF has been described, but all of these timing controls may be performed, or at least one of the timing controls may be performed, and another timing control may not be performed.

Further, in each of the above-described embodiments, the information related to the timing for starting downlink (transmission) and uplink (reception) for the satellite after switching may be information related to an offset (or a gap) from the timing for starting downlink (transmission) and uplink (reception) for the satellite before switching.

Further, in each of the above-described embodiments, a case where terminal 200 performs no uplink transmission until re-synchronization with a satellite after switching is performed has been described, but the present disclosure is not limited thereto, and for example, terminal 200 may resume the uplink transmission after receiving SSB via the satellite after switching.

Further, in each of the above-described embodiments, information indicating whether the stop or start timing of downlink and uplink is the same, or information indicating which of the stop (or start) of downlink and uplink is earlier, may be notified to terminal 200.

Further, in each of the above-described embodiments, the information related to the timing to be notified to terminal 200 may be represented by an absolute time such as UTC (Coordinated Universal Time) or may be represented by a System Frame Number (SFN) or a slot number. In terminal 200, the timing is often managed by SFNs or slot numbers, and thus, the management of the timing in the terminal is simplified by using SFNs or slot numbers.

Further, in each of the above-described embodiments, whether terminal 200 performs at least one of an operation of not performing uplink transmission within a predetermined period (or operation of stopping and resuming) and/or an operation of not detecting or triggering RLF may be determined in accordance with a notification (Configuration) from base station 100. Further, the notification from base station 100 may be notified to terminal 200 as system information (SIB).

Further, in each of the above-described embodiments, terminal 200 performs the re-synchronization processing for the satellite after switching, but when the re-synchronization processing is not completed within a predetermined time, terminal 200 may determine that RLF has occurred and may perform reconnection processing. Alternatively, terminal 200 may transition to RRC_IDLE and perform cell search and initial connection processing. The predetermined time may be managed by a timer inside terminal 200 or may be managed using a timer value notified from base station 100.

Further, the notification information related to re-synchronization need not be notified explicitly. For example, the notification information related to re-synchronization may be implicitly notified by timing information. For example, in a case where the timing information is notified from base station 100 to terminal 200, terminal 200 performs the re-synchronization processing based on the notified timing.

Further, the timing information may be information common to terminals 200 within a cell, such as information included in system information, or may be information different for each terminal 200 (information notified to each terminal individually). In the latter case, it is possible to avoid PRACH collision or to reduce congestion due to transmission of PRACH from a large number of terminals 200 in a short time.

Further, at least one of satellite ephemeris information for the satellite after switching, a common TA parameter, and/or an epoch time may be notified to terminal 200 in advance or may be notified by SIB after switching. In the former case, terminal 200 can transmit the uplink signal before receiving the downlink signal, which makes it possible to establish re-synchronization in a short time. In the latter case, terminal 200 receives SIB (e.g., SIB19 related to NTN) at the time of re-synchronization and then performs PRACH transmission after obtaining information such as satellite ephemeris information, a common TA parameter, or an epoch time.

Further, in each of the above-described embodiments, an example has been described in which the start timing of a satellite after switching is later than the stop timing of the satellite before switching, but the start timing of the satellite after switching may be earlier than the stop timing of the satellite before switching (that is, an early timing).

Further, in each of the above-described embodiments, any one or a plurality of pieces of information related to whether the PCI changes, information related to whether the satellite or the feeder link switches, and/or information related to whether the coverage by the satellite is interrupted may be notified from base station 100 to terminal 200 together with the timing information. Terminal 200 may perform operations such as performing a cell (PCI) search after the notified timing, performing re-synchronization assuming the same PCI, and turning into sleep, based on this information.

Further, in each of the above-described embodiments, the information related to the start timing of the satellite after switching may be replaced with the information related to the timing at which terminal 200 starts re-synchronization processing after switching.

The satellite before switching may be referred to as a source satellite or a serving satellite. The satellite after switching may be referred to as a target satellite.

Further, each of the above-described embodiments is applicable to any of the embodiments regardless of the configuration of a ground station apparatus (ground gateway or ground station).

Further, the operations and notification contents in Embodiments 1 to 4 may be configurable in the network.

Further, each of the above-described embodiments is applicable regardless of a state of terminal 200. For example, the above-described embodiments are applicable in any of the RRC_CONNECTED, RRC_INACTIVE, and RRC_IDLE states.

Further, in each of the above-described embodiments, in a case where a paging (e.g., a call of terminal 200) occurs during a downlink stop period in base station 100, for example, after the stop of the satellite link before switching and before the start of the satellite link after switching, base station 100 transmits paging information in the next paging cycle or paging opportunity after the period (e.g., after the start of the satellite link after switching), and terminal 200 may receive the paging information.

Further, in each of the above-described embodiments, an operation example at the time of satellite switching has been described, but the same is applicable even in a case where a feeder link ground station (such as a ground gateway) is switched without switching a satellite.

Further, in each of the above-described embodiments, NTN is mainly targeted, but the present disclosure is applicable to a non-NTN target. For example, the present disclosure is applicable when a relay apparatus for communication with terminal 200 is changed.

Further, the above-described embodiments are also applicable to an NR specification based NTN and an NB-IoT and MTC (LTE) based NTN.

One exemplary embodiment of the present disclosure is applicable to satellite communication using different types of satellites such as low earth orbit (LEO) satellites, medium earth orbit (MEO) satellites, highly elliptical orbit (HEO) satellites, or geostationary earth orbit (GEO) satellites, which have different altitudes from the ground.

Further, in each of the embodiments described above, the satellite ephemeris information, which is information related to the satellite position, may be broadcasted by system information or may be held in advance by terminal 200. Further, the satellite ephemeris information may be updated when communication is possible. Further, terminal 200 may identify the satellite position using information different from the satellite ephemeris information.

Further, in each of the embodiments described above, an example in which a GNSS (e.g., position detection using satellite signal) such as GPS is used has been described, but the present disclosure is not limited thereto, and for example, position detection by a terrestrial cellular base station, position detection using a WiFi (registered trademark) signal or a Bluetooth (registered trademark) signal, position detection using an acceleration sensor or the like, or position detection by a combination of these detection methods may be performed. Further, the altitude information may be acquired from a pressure sensor or the like.

Further, in each of the embodiments described above, the cell may be an area defined by the reception power of an SSB or a Channel State Information - Reference Signal (CSI-RS) transmitted by a base station (or a satellite), or an area defined by a geographical position. Further, the cell in each of the above-described embodiments may be replaced with a beam defined by SSB.

Further, the satellite ephemeris information and the common TA parameter information may be notified, for example, as "EpochTime" and "TAInfo" in the NTN-Config of SIB19, respectively.

Further, in each of the embodiments described above, the base station may be read as a "network."

Further, in each of the embodiments described above, terminal 200 may perform received quality measurement using another signal such as a CSI-RS instead of an SSB signal.

Further, in the above-described embodiments, uplink transmission from terminal 200 to base station 100 has been described, but one exemplary embodiment of the present disclosure is not limited thereto and may be applied to data in downlink from base station 100 to terminal 200 or in a link (e.g., a sidelink) between terminals 200.

Further, one exemplary embodiment of the present disclosure can be applied regardless of the type of satellite, such as GEO, MEO, LEO, or HEO. Further, one exemplary embodiment of the present disclosure may be applied to non-terrestrial communication such as HAPS or a drone base station.

Further, in the above-described embodiments, the NTN environment (e.g., satellite communication environment) has been described as an example, but the present disclosure is not limited thereto. The present disclosure may be applied to another communication environment (e.g., at least one terrestrial cellular environment of LTE and/or NR). For example, one exemplary embodiment of the present disclosure may be applied to terrestrial communication in an environment where the cell size is large and the propagation delay between base station 100 and terminal 200 is longer (e.g., equal to or longer than a threshold).

Further, in the embodiment described above, the satellite communication form may be a configuration in which the functions of a base station are present on a satellite (e.g., "regenerative satellite"), or a configuration in which the functions of a base station are present on the ground and a satellite relays communication between the base station and the terminal (e.g., "transparent satellite"). For example, in one exemplary embodiment of the present disclosure, downlink and uplink may be a link between a terminal and a satellite or a link via a satellite.

Further, the notification method for control information from base station 100 to terminal 200 is not limited to the examples described above and may be notified (or, broadcast, indicated, configured) by at least one of system information such as MIB and SIB, RRC control information, MAC control information, and/or downlink control information (DCI), may be configured in advance in terminal 200, or may be defined in advance by the standard.

The base station may be referred to as a gNodeB or a gNB. Further, the terminal may be referred to as user equipment (UE).

The time resource units such as system frame and subframe may be replaced with slot, time slot, minislot, frame, subframe, and the like.

Further, the expression "...er" in the above-described embodiments may be replaced with other expressions such as "...circuitry," "...device," "...unit," or "...module."

### (Supplementary Note)

Information indicating whether terminal 200 supports the functions, operations, or processes described in the above-described embodiments may be transmitted (or indicated) from terminal 200 to base station 100 as capability information or a capability parameter for terminal 200.

The capability information may include an information element (IE) individually indicating whether terminal 200 supports at least one of the functions, operations, or processes described in the above-described embodiments. Alternatively, the capability information may include an information element (IE) indicating whether terminal 200 supports a combination of any two or more of the functions, operations, or processes described in the above-described embodiments.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control the configuration of the terminal-to-terminal CLI report based on the capability information received from terminal 200. For example, base station 100 may control communication for NTN based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information related to the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) related to one exemplary embodiment of the present disclosure may be a signal (or information) transmitted of a Physical Downlink Control Channel (PDCCH) in a physical layer, for example, or may be a signal (or information) transmitted through a Medium Access Control Control Element (MAC CE) of the higher layer or the Radio Resource Control (RRC). Further, the signal (or information) is not limited to being indicated by the downlink control signal, and may be predefined in the specifications (or standard) or may be pre-configured in a base station and a terminal.

In the present disclosure, the uplink control signal (or uplink control information) related to one exemplary embodiment of the present disclosure may be, for example, a signal (or information) transmitted through a PUCCH of the physical layer or a signal (or information) transmitted through a MAC CE of the higher layer or the RRC. Further, the signal (or information) is not limited to being indicated by the uplink control signal and may be specified by the specifications (or standards) in advance or may be preconfigured in a base station and a terminal. Further, the uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of uplink, downlink, and sidelink. For example, one exemplary embodiment of the present disclosure may be applied to uplink channels such as Physical Uplink Shared Channel (PUSCH), Physical Uplink Control Channel (PUCCH), and Physical Random Access Channel (PRACH), downlink channels such as Physical Downlink Shared Channel (PDSCH), PDCCH, and Physical Broadcast Channel (PBCH), or sidelink channels such as Physical Sidelink Shared Channel (PSSCH), Physical Sidelink Control Channel (PSCCH), and Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of broadcast channels, and the PRACH is an example of a random access channel.

### (Data channel/Control channel)

One exemplary embodiment of the present disclosure may be applied to, for example, any of data channels and control channel. For example, the channels in one exemplary embodiment of the present disclosure may be replaced with any of data channels including PDSCH, PUSCH, and PSSCH and/or control channels including PDCCH, PUCCH, PBCH, PSCCH, and PSBCH.

### (Reference Signal)

In one exemplary embodiment of the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiple access (SC-FDMA) symbols, or other time resource units. The number of symbols included in one slot is not limited to any number of symbols exemplified in the embodiments described above, and may be other numbers of symbols.

### (Frequency Band)

One exemplary embodiment of the present disclosure may be applied to any of a licensed band and an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, the channel in one exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, one exemplary embodiment of the present disclosure may be applied to any of a terrestrial network or a network other than a terrestrial network (NTN: Non-Terrestrial Network) using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Antenna Port)

In one exemplary embodiment of the present disclosure, the antenna port refers to a logical antenna (antenna group) configured of one or more physical antennae. For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

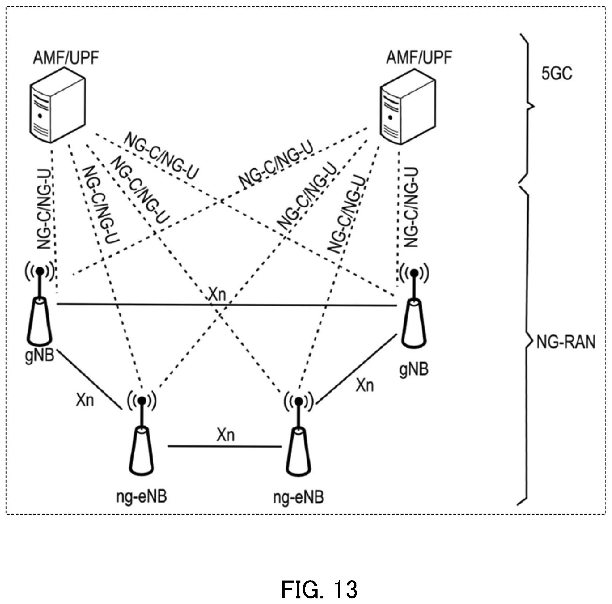

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. FIG. 13 illustrates an NG-RAN architecture (e.g., see section 4 of 3GPP TS 38.300 v15.6.0).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10⁻⁵ within 1 ms). Finally, the mMTC may preferably require high connection density (1,000,000 devices/km² in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is specified based on the frequency index in the frequency domain and the symbol position in the time domain (see 3GPP TS 38.211 v15.6.0).

### <5G NR Functional Split between NG-RAN and 5GC>

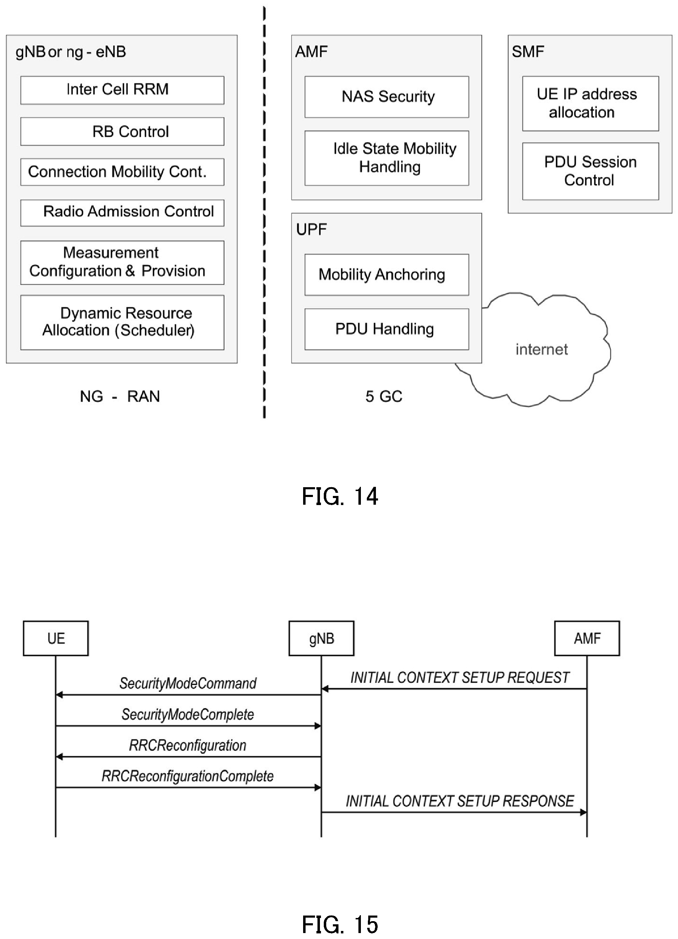

FIG. 14 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:
- Functions for radio resource management such as radio bearer control, radio admission control, connection mobility control, dynamic allocation (scheduling) of resources to UEs in both uplink and downlink;
- IP header compression, encryption, and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual connectivity; and
- Tight interworking between NR and E-UTRA.

The access and mobility management function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:
- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g., packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:
- Session management;
- UE IP address allocation and management;
- Selection and control of UPF;
- Configuration function of traffic steering at a user plane function (UPF) to route traffic to proper destination;
- Control part policy enforcement and QoS; and
- Downlink data indication.

### <RRC Connection Setup and Reconfiguration Procedures>

FIG. 15 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and User Equipment (UE). In particular, the gNodeB transmits a Radio Resource Control (RRC) signaling containing a resource allocation configuration information element (IE) to the UE via the signaling radio bearer. The UE then performs an uplink transmission or a downlink reception based on the resource allocation configuration.

### <Usage Scenarios of IMT for 2020 and beyond>

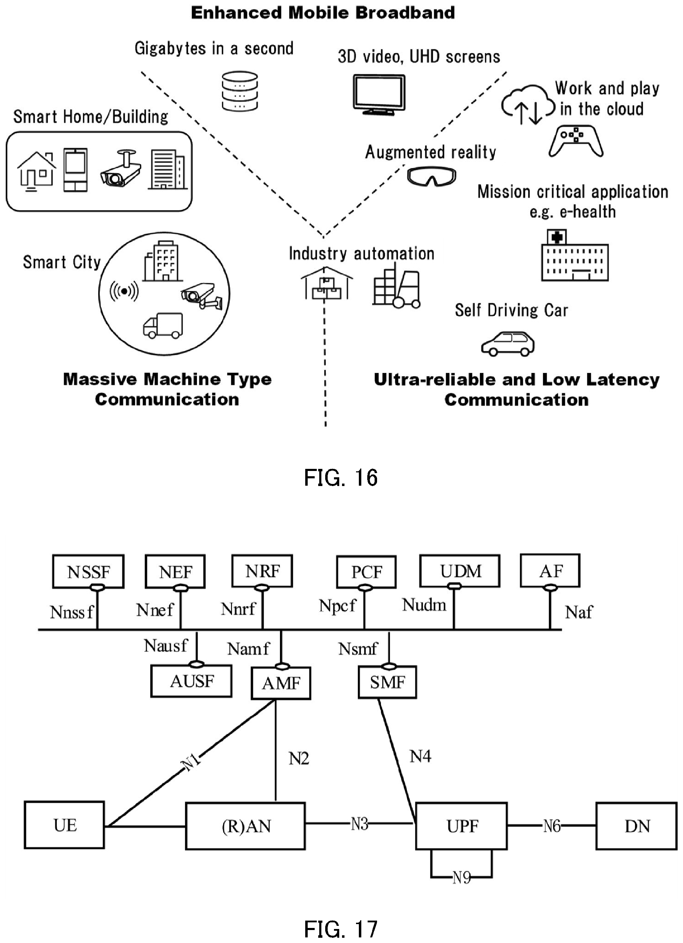

FIG. 16 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. Further to further extending the eMBB support, the current and future work would involve the standardization for ultra-reliable and low-latency communications (URLLC) and massive machine-type communications (mMTC). FIG. 16 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by specifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non-slot based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10⁻⁶ level), higher availability, packet size of up to 256 bytes, time synchronization down to the order of a few µs where the value can be one or a few µs depending on frequency range and short latency in the order of 0.5 ms to 1 ms (e.g., target user plane latency of 0.5 ms) depending on the use cases.

Moreover, for NR URLLC, several technology enhancements in terms of the physical layer perspective are possible. These technology enhancements include Physical Downlink Control Channel (PDCCH) enhancements related to compact DCI, PDCCH repetition, and increased PDCCH monitoring. Further, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements are possible. The term "mini-slot" refers to a transmission time interval (TTI) including a smaller number of symbols than a slot (a slot includes fourteen symbols).

### <QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. The QoS flow is specified within a PDU session by a QoS Flow ID (QFI) carried in an encapsulation header via the NG-U interface.

For each UE, the 5GC establishes one or more PDU sessions. For each UE, the NG-RAN establishes at least one Data Radio Bearer (DRB) matching with the PDU session, for example as illustrated above with reference to FIG. 15. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

FIG. 17 illustrates a 5G NR non-roaming reference architecture (see TS 23.501 v16.1.0, section 4.23). Application Function (AF, e.g., an external application server hosting 5G services exemplified in FIG. 16) interacts with the 3GPP core network in order to provide services. For example, to support application giving influence on traffic routing, accessing Network Exposure Function (NEF) or interacting with the policy framework for policy control (see Policy Control Function, PCF), e.g., QoS control is performed. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 17 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture) is provided that includes a transmitter, which in operation, transmits a request containing a QoS requirement for at least one of the URLLC, eMMB, and/or mMTC services to at least one of functions (e.g., NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the configurations of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a communication function (collectively referred to as a communication apparatus). The communication apparatus may include a radio transmitter/receiver (transceiver) and processing/control circuitry. The transceiver may include and/or function as a receiver and a transmitter. The transceiver (transmitter/receiver) may include a Radio Frequency (RF) module and one or more antennas. The RF module may include an amplifier and an RF modulator/demodulator or components similar to these components. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one exemplary embodiment of the present disclosure includes: reception circuitry, which, in operation, receives control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and control circuitry, which, in operation, controls re-synchronization processing in the second communication path based on the control information.

In one exemplary embodiment of the present disclosure, the control circuitry starts the re-synchronization processing based on at least one of the first start timing and/or the second start timing.

In one exemplary embodiment of the present disclosure, the control circuitry controls such that the uplink communication is not performed in a period determined based on the second stop timing and the second start timing.

In one exemplary embodiment of the present disclosure, the control circuitry controls such that the uplink communication is not performed in a period determined based on the second stop timing and the first start timing.

In one exemplary embodiment of the present disclosure, the control circuitry controls such that processing related to Radio Link Failure (RLF) or Beam Failure (BF) is not triggered in a period determined based on the first stop timing and the first start timing.

In one exemplary embodiment of the present disclosure, the control circuitry controls such that processing related to Radio Link Failure (RLF) or Beam Failure (BF) is not triggered in a period determined based on the second stop timing and the first start timing.

In one exemplary embodiment of the present disclosure, the control information includes information related to the first start timing and does not include information related to the first stop timing, the second stop timing, and the second start timing, and the control circuitry controls such that the uplink communication is not performed or processing related to Radio Link Failure (RLF) or Beam Failure (BF) is not triggered in a period determined based on a reception timing of information related to notification of switching from the first communication path to the second communication path, and the first start timing.

In one exemplary embodiment of the present disclosure, the control information includes information related to the first stop timing and does not include information related to the second stop timing, the first start timing, and the second start timing, and the control circuitry controls such that the uplink communication is not performed or processing related to Radio Link Failure (RLF) or Beam Failure (BF) is not triggered in a period determined based on the first stop timing and a timing at which synchronization is established in the second communication path.

In one exemplary embodiment of the present disclosure, the control circuitry starts the re-synchronization processing based on the first stop timing.

A base station according to one exemplary embodiment of the present disclosure includes: transmission circuitry, which, in operation, transmits control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and control circuitry, which, in operation, controls re-synchronization processing of a terminal in the second communication path based on the control information.

A communication method according to one exemplary embodiment of the present disclosure includes: receiving, by a terminal, control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and controlling, by the terminal, re-synchronization processing in the second communication path based on the control information.

A communication method according to one exemplary embodiment of the present disclosure includes: transmitting, by a base station, control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and controlling, by the base station, at least one communication of the downlink communication and/or the uplink communication based on the control information.

The disclosure of Japanese Patent Application No. 2023-127752, filed on August 4, 2023, including the specification, drawings, and abstract, is incorporated herein by reference in its entirety.

### Industrial Applicability

One exemplary embodiment of the present disclosure is useful for radio communication systems.

### Reference Signs List

100 Base station
101, 201 Antenna
102, 202 Radio receiver
103 Data reception processor
104 Controller
105, 206 Data transmission processor
106, 207 Radio transmitter
200 Terminal
203 Data reception processor
204 Controller
205 Timing adjuster

## Claims

1. A terminal, comprising:
reception circuitry, which, in operation, receives control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and
control circuitry, which, in operation, controls re-synchronization processing in the second communication path based on the control information.

2. The terminal according to claim 1, wherein, the control circuitry starts the re-synchronization processing based on at least one of the first start timing and/or the second start timing.

3. The terminal according to claim 1, wherein, the control circuitry controls such that the uplink communication is not performed in a period determined based on the second stop timing and the second start timing.

4. The terminal according to claim 1, wherein, the control circuitry controls such that the uplink communication is not performed in a period determined based on the second stop timing and the first start timing.

5. The terminal according to claim 1, wherein, the control circuitry controls such that processing related to Radio Link Failure (RLF) or Beam Failure (BF) is not triggered in a period determined based on the first stop timing and the first start timing.

6. The terminal according to claim 1, wherein, the control circuitry controls such that processing related to Radio Link Failure (RLF) or Beam Failure (BF) is not triggered in a period determined based on the second stop timing and the first start timing.

7. The terminal according to claim 1, wherein,
the control information includes information related to the first start timing and does not include information related to the first stop timing, the second stop timing, and the second start timing, and
the control circuitry controls such that the uplink communication is not performed or processing related to Radio Link Failure (RLF) or Beam Failure (BF) is not triggered in a period determined based on a reception timing of information related to notification of switching from the first communication path to the second communication path, and the first start timing.

8. The terminal according to claim 1, wherein,
the control information includes information related to the first stop timing and does not include information related to the second stop timing, the first start timing, and the second start timing, and
the control circuitry controls such that the uplink communication is not performed or processing related to Radio Link Failure (RLF) or Beam Failure (BF) is not triggered in a period determined based on the first stop timing and a timing at which synchronization is established in the second communication path.

9. The terminal according to claim 8, wherein, the control circuitry starts the re-synchronization processing based on the first stop timing.

10. A base station, comprising:
transmission circuitry, which, in operation, transmits control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and
control circuitry, which, in operation, controls re-synchronization processing of a terminal in the second communication path based on the control information.

11. A communication method, comprising:
receiving, by a terminal, control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and
controlling, by the terminal, re-synchronization processing in the second communication path based on the control information.

12. A communication method, comprising:
transmitting, by a base station, control information related to at least one of a first stop timing of downlink communication in a first communication path before switching, a second stop timing of uplink communication in the first communication path, a first start timing of downlink communication in a second communication path after switching, and/or a second start timing of uplink communication in the second communication path; and
controlling, by the base station, at least one communication of the downlink communication and/or the uplink communication based on the control information.
